# EUROPEAN PATENT APPLICATION

(11) **EP 0 945 171 A2**
(43) Date of publication of application: **29.09.1999**
(21) Application number: 99302325.8
(22) Date of filing: 25.03.1999
(51) Int. Cl.: B01F 15/04, B29B 7/94, G05D 11/02

(54) **Method of metering a liquid additive into a liquid silicon-containing material**

(30) Priority: 27.03.1998 US 49501
(71) Applicant: DOW CORNING CORPORATION, Midland Michigan 48686-0994 (US)
(72) Inventor: Trombley, Wayne Edward, Elizabethtown, Kentucky 42710 (US)
(74) Representative: Kyle, Diana

(57) **Abstract**

A method of metering a liquid additive into a liquid silicon-containing material. The method comprises feeding a liquid silicon-containing material through a first rotary gear positive displacement pump (1) causing a driving mechanism (3,4,5) connecting the first rotary gear positive displacement pump (1) to a second rotary gear positive displacement pump (2) to rotate. The rotating driving mechanism (3,4,5) causes the second rotary gear positive displacement pump (2) to pump a liquid additive at a volume flow rate proportionate to the volume flow rate of the liquid silicon-containing material through the first rotary gear positive displacement pump (1).

## Description

This invention is a method of metering a liquid additive into a liquid silicon-containing material. The method comprises feeding a liquid silicon-containing material through a first rotary gear positive displacement pump causing a driving mechanism connecting the first rotary gear positive displacement pump to a second rotary gear positive displacement pump to rotate. The rotating driving mechanism causes the second rotary gear positive displacement pump to pump a liquid additive at a volume flow rate proportionate to the volume flow rate of the liquid silicon-containing material through the first rotary gear positive displacement pump.

Conventional methods of metering pigments into silicone sealants consist primarily of three methods. The first method includes positive displacement pumps such as gear pumps or progressive cavity pumps controlled by variable speed drives in which the desired flow rate of silicone sealant and pigment is controlled by changing the rotational speed of the pumps according to a pre-determined calibration curve developed for the particular liquids being pumped. There are problems with this method because there is no feedback control for the metering pumps and so it is possible for the speed of the pumps to drift over time. In addition, if one pump stops, there is no means to send a signal to the other pump, in both cases resulting in off-ratio metering of the silicone sealant and additive feed streams.

Another method utilizes the same concept described above but includes a flow controller capable of generating a control signal which can be sent back to the pump drive through a feedback loop. This method is an improvement over the method previously described but it is very expensive requiring investment in flow controllers that have been especially designed for use with viscous liquids such as silicone sealants and pigments. There is also added difficulty in changing from one formulation to another since the flow controllers must be cleaned to avoid contamination of the new material. There is also a potential problem as to whether the flow controller will work if the viscosity of the silicone sealant or additive changes.

Another method of metering pigments into silicone sealants utilizes volumetric displacement cylinders or dosing cylinders in which silicone sealants and pigments may be alternately filled, then emptied by forcing the liquids out under mechanical or hydraulic methods. By their nature, dosing cylinders are not capable of smooth, uninterrupted flow of material which makes this a very ineffective method of pigmenting silicone sealants. Other problems with this method relate to the overall size of the equipment and that this reciprocating-type equipment tends to wear out quickly.

It is therefore desirable to provide a method of metering a pigment into a silicone sealant which does not have these drawbacks. The present inventor has determined that a liquid additive may be metered into a liquid silicon-containing material by using the flow of the liquid silicon-containing material through a first rotary gear positive displacement pump to provide the motive force to drive a second rotary gear positive displacement pump. By connecting a liquid additive to the second rotary gear positive displacement pump, the liquid additive is pumped at a volume flow rate proportionate to the volume flow rate of the liquid silicon-containing material through the first rotary gear positive displacement pump.

This invention is a method of metering a liquid additive into a liquid silicon-containing material comprising feeding a liquid silicon-containing material through a first rotary gear positive displacement pump causing a driving mechanism connecting the first rotary gear positive displacement pump to a second rotary gear positive displacement pump to rotate causing the second rotary gear positive displacement pump to pump a liquid additive at a volume flow rate proportionate to the volume flow rate of the liquid silicon-containing material through the first rotary gear positive displacement pump.

The term "silicon-containing material" is used herein to include any material comprising at least one component which comprises at least one silicon atom per molecule. Examples of silicon-containing materials include fluids, gums, rubbers, pastes, sealants, caulks, adhesives and resins. Examples of components which comprise at least one silicon atom per molecule include polysiloxanes, silanes, silazanes and silcarbanes. Preferably the silicon-containing material comprises a polydiorganosiloxane. More preferably the silicon-containing material comprises a silicone sealant.

Silicone sealants typically comprise a polydiorganosiloxane, a filler, a crosslinker and a curing catalyst. Optionally, additives such as pigments, adhesion promoters, rheology additives, fungicides and plasticizers may also be added as desired. Silicone sealants are made by mixing these various ingredients in predetermined defined weight or volume ratios. For room temperature vulcanizing (RTV ) silicone sealants, polydiorganosiloxanes are endblocked with silanol or other appropriate hydrolyzable groups, such as alkoxysilanes. These polydiorganosiloxanes typically have a viscosity in excess of 1000 mPa·s as measured at 25°C., preferably from 1000 to 100,000 mPa·s as measured at 25°C.

Useful fillers are (i) reinforcing fillers such as silica and carbon black; and (ii) non-reinforcing or semi-reinforcing fillers such as titanium dioxide, quartz, diatomaceous earth, calcium carbonate and alumina.

The crosslinking agents are generally silanes or partial hydrolysis products of silanes. These silanes include acetoxysilanes, alkoxysilanes, ketoximosilanes, aminosilanes and amidosilanes. The crosslinking silanes have three to four hydrolyzable groups per molecule, while the partial hydrolysis products may have more than three hydrolyzable groups per molecule.

Catalysts for curing the silicone sealant mixtures are dependent upon the type of crosslinking agent and include compounds such as metal carboxylates, organotin compounds, tetraalkyltitanates, titanate chelates and zirconium alkoxides and chelates.

Desired additives may be added as the silicone sealant is prepared or in a separate processing step.

As used herein, the term "additive" comprises any material which can be added to a liquid silicon-containing material without being detrimental to its intended use. Preferably, an additive comprises a material which is not required for preparing the liquid silicon-containing material but is added to the liquid silicon-containing material as desired to tailor the liquid silicon-containing material for its intended use. Examples of such additives include pigments, adhesion promoters, rheology additives, fungicides and plasticizers. The preferred additive comprises a pigment.

Both the silicon-containing material and the additive must be liquid. As used herein, the term "liquid" for both silicon-containing material and additive means those materials and additives capable of being pumped. To ensure that the liquid silicon-containing material and liquid additive are pumpable, the viscosity of the liquid silicon-containing material and the liquid additive should each be within the range of 0.1 to 3,000,000 mPa·s as measured at 25°C., and preferably each should have a viscosity within the range of 0.1 to 300,000 mPa·s as measured at 25°C. Most preferably, to ensure thorough mixing, the viscosity of the liquid silicon-containing material and the liquid additive should have similar viscosities. If necessary to make the liquid silicon-containing material or liquid additive pumpable, the viscosity of the liquid silicon-containing material or liquid additive may be adjusted by methods known in the art. Examples of such methods include, dispersing an additive such as a pigment in a liquid carrier, polymer blending, for instance a low viscosity oligomer can be utilized to reduce the viscosity of a gum or by mixing a polymer and a solvent or a low viscosity plasticizer.

As used herein, the term "rotary gear positive displacement pump" describes pumps comprising one or more pump apparatuses in a pump casing which rotate as a liquid flows through the pump causing a first drive shaft connected thereto to rotate. If this first drive shaft is connected to a second drive shaft of another rotary gear positive displacement pump, as the first drive shaft rotates it can provide the motive force necessary to rotate the second drive shaft. Preferred pump apparatuses are gears or rotating lobes. Preferred rotary gear positive displacement pumps comprise two gears which rotate with an extremely small clearance between each other and between the surface of the gears and the pump casing. The gears can take the form of toothed-gear wheels, helical gears or lobed cams, and are preferably toothed-gears.

A driving mechanism connects the first rotary gear positive displacement pump and the second rotary gear positive displacement pump. The driving mechanism can include any conventional method for transferring rotary power from one apparatus to another such as a belt, gears, drive shaft or flexible drive shaft and the driving mechanism may be connected through a variable speed gear reducer. A preferred driving mechanism comprises a three piece flexible coupling providing an aligned connection of the drive shafts of the first rotary gear positive displacement pump and the second rotary gear positive displacement pump.

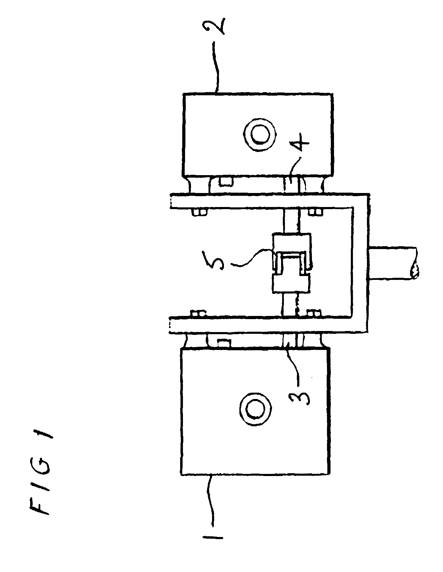

Accompanying Figure 1, which is a sectional view of a form of connection, between pumps, illustrates such a driving mechanism. A first rotary gear positive displacement pump 1 and a second rotary gear positive displacement pump 2 are provided with shafts 3 and 4 which extend from their respective housings. An aligned connection of shafts is provided by a flexible three-piece coupling 5 including bodies connected on to the ends of the shafts with the spider connecting between the two bodies.

A description of the preferred equipment for use in the present method is provided in U.S. Patent 4,511,378. The more preferred rotary gear positive displacement pump assembly usable in the present method is an Energy Exchange Pump Assembly (Rotor-Tech, Inc., Houston, TX).

The liquid silicon-containing material is fed through the first rotary gear positive displacement pump, preferably under positive pressure. As used herein, the term "positive pressure" means the pressure at the inlet of the rotary gear positive displacement pump is greater than the pressure at the outlet of the rotary gear positive displacement pump. The positive pressure may be obtained by feeding the liquid silicon-containing material by conventional methods such as from a continuous compounder or extruder or using a gear pump or piston pump. Preferably, the liquid silicon-containing material is fed through the first displacement pump under a positive pressure in the range of 0.0007 to 13.8 MPa and more preferably under a positive pressure in the range of 0.0007 to 4 MPa. The volume flow rate of the liquid silicon-containing material through the first displacement pump is not critical so long as the liquid silicon-containing material is moving through the first displacement pump at a rate which will cause the driving mechanism to rotate. Preferably, the volume flow rate of the liquid silicon-containing material is from 24 to 15,000 liters/hour (l/hr) and more preferably from 37 to 7000 l/hr. The temperature at which the liquid silicon-containing material is fed through the first displacement pump is also not critical. Preferably, the liquid silicon-containing material is fed to the first displacement pump at temperatures less than the boiling point of any of the components of the liquid silicon-containing material or 200°C. or less, whichever is lower, and more preferably at temperatures between 20 and 50°C.

The liquid additive fed to the second rotary gear positive displacement pump is preferably contained in a reservoir which is connected to the second rotary gear positive displacement pump. The type of reservoir holding the liquid additive is not critical and any conventional holding devices can be used. The liquid additive is fed from the reservoir to the second rotary gear positive displacement pump by conventional methods such as a pump or other liquid feed system which preferably feeds the liquid additive to the second rotary gear positive displacement pump under positive pressure. More preferably, the liquid additive is fed to the second rotary gear positive displacement pump under a positive pressure less than 1.4 MPa and most preferably the liquid additive is fed to the second rotary gear positive displacement pump under a positive pressure no higher than 0.17 MPa.

In the present method the liquid silicon-containing material flowing through the first rotary gear displacement pump causes the driving mechanism connecting the first rotary gear positive displacement pump to the second rotary gear positive displacement pump to rotate. As the driving mechanism rotates it causes the second rotary gear positive displacement pump to pump a liquid additive at a volume flow rate proportionate to the volume flow rate of the liquid silicon-containing material through the first rotary gear positive displacement pump.

The first rotary gear positive displacement pump may have the same or a different volume flow rate as the second rotary gear positive displacement pump depending on the volume of liquid additive it is desired to have metered into the liquid silicon-containing material. As used herein, the term "volume flow rate" describes the volume of material that a rotary gear positive displacement pump can pump during a specific period of time. Preferably, the first rotary gear positive displacement pump has a volume flow rate of 1 to 200 times the volume flow rate of the second rotary gear positive displacement pump with a volume flow rate of 1 to 60 times being more preferred.

Since the first rotary gear positive displacement pump is connected to the second rotary gear positive displacement pump the volume flow rates of the liquid silicon-containing material and the liquid additive will be proportionate. As used herein, the term "proportionate" means that other than normal variations which occur when operating equipment of this type, the ratio of the volume flow rate of the liquid silicon-containing material to the volume flow rate of the liquid additive should remain proportionate. The specific volumetric ratio of liquid silicon-containing material to liquid additive desired for a particular composition will determine the needed volume flow rates of each rotary gear positive displacement pump used. The volume flow rates of the rotary gear positive displacement pumps may be changed by conventional means, such as by using variable speed gear reducers or variable speed belt drives or by changing the pumps to others capable of providing different volume flow rates. Preferably the volume flow rates are changed by substituting rotary gear positive displacement pumps capable of providing the needed volume flow rates.

By utilizing the flow of the liquid silicon-containing material through the first rotary gear positive displacement pump to drive the pump, no external power is required to drive the second rotary gear positive displacement pump. Eliminating the need for external power provides a substantial cost savings for this method. In addition, by connecting the first rotary gear positive displacement pump to the second rotary gear positive displacement pump, the volume flow rate of the liquid silicon-containing material and the volume flow rate of the additive will remain proportionate even under changing conditions.

The liquid additive which is metered into the liquid silicon-containing material by the present method may then be thoroughly mixed with the liquid silicon-containing material by any conventional means such as a static or dynamic mixer. Recovery of the mixed material is then accomplished by conventional means such as transferring into pails, drums, bulk containers or cartridges.

Although a preferred embodiment of the method has been described such that a first rotary gear positive displacement pump drives only one other rotary gear positive displacement pump, persons skilled in the art would recognize that other rotary gear positive displacement pumps could be added as desired to meter additional liquid additives into the liquid silicon-containing material so long as all of the pumps are also serially or parallel connected. Persons skilled in the art would also recognize that the method can be run by having the second rotary gear positive displacement pump drive the first rotary gear positive displacement pump, however, since typically the volume of the liquid additive required would be less than the volume of liquid silicon-containing material required, this would not provide as efficient a method as that described herein.

The present method is further illustrated by the following examples which are presented for that purpose and are not intended to limit the scope of the claims herein.

In each example described below, an Energy Exchange Pump Assembly having a first rotary gear positive displacement pump (GS3310) connected to a second first rotary gear positive displacement pump (GM-1) purchased from Rotor-Tech, Inc., Houston, TX was used. The assembly had a calculated volumetric ratio of 49.6 to 1 (first rotary gear positive displacement pump to second rotary gear positive displacement pump). Also in each example, the relevant sealant was pumped out of a drum under positive pressure through the first rotary gear positive displacement pump using a 10:1 pneumatic piston pump. The amount of pressure at the inlet of the first rotary gear positive displacement pump and the discharge of the first rotary gear positive displacement pump (also known as the back pressure) were varied to simulate a wide range of potential run conditions, however a positive pressure was always maintained to overcome line losses and achieve maximum flow from the piston pump through the system. The relevant additive was supplied to the second rotary gear positive displacement pump using a 10:1 pneumatic piston pump under a positive pressure of 0.17 MPa. The temperature of both sealant and additive when fed through the assembly was 25°C.

### Example 1

Dow Corning 899^{®} Clear Silicone Glazing Sealant (Dow Corning Corp., Midland MI), a moisture curable, room temperature vulcanizing (RTV) silicone sealant having a specific gravity of approximately 1.045, was fed through the first rotary gear positive displacement pump under positive pressure at a flow rate of 726 kg/hr. As the sealant flowed through the pump it caused the second rotary gear positive displacement pump to pump an additive. The additive was Dow Corning^{®} 200 Fluid, (Dow Corning Corp., Midland MI) a non-functional silicone fluid having a viscosity of 100,000 mm²/s and a specific gravity of approximately 0.97. Various runs were made and the weights of sealant and additive pumped during a specific time period were measured as shown in Table 1. The calculated volumetric ratios of sealant to pigment were proportionate using this method.

**Table 1:**

| Metering of Dow Corning^{®} 200 Fluid into RTV Silicone Sealant | | | | |
|---|---|---|---|---|
| Sample | Back Pressure (MPa) | Sealant Weight (kg) | Additive Weight (kg) | Sealant/Additive Volumetric Ratio |
| 1-1 | 0 | 3.85 | 0.068 | 52.5/1 |
| 1-2 | 1.38 | 4.04 | .082 | 45.7/1 |
| 1-3 | 3.4 | 2.70 | .05 | 50.1/1 |

### Example 2

Dow Corning^{®} 4590 Clear Silicone Sealant (Dow Corning Corp., Midland MI), a moisture curable, room temperature vulcanizing (RTV) silicone sealant having a specific gravity of approximately 1.04, was fed through the first rotary gear positive displacement pump under positive pressure. As the sealant flowed through the pump it caused the second rotary gear positive displacement pump to pump an additive. The additive was a dispersion of titanium dioxide pigment in Dow Corning® 200 Fluid, (Dow Corning Corp., Midland MI) a non-functional silicone fluid having a viscosity of 12,500 mm²/s. The additive had a specific gravity of approximately 1.3. Various runs were made and the weights of sealant and additive pumped during a specific time period were measured as shown in Table 2. The calculated volumetric ratios of sealant to pigment were proportionate using this method.

**Table 2.**

| Metering of Pigment Dispersion into RTV Silicone Sealant | | | | |
|---|---|---|---|---|
| Sample | Back Pressure (MPa) | Sealant Weight (kg) | Additive Weight (kg) | Sealant/Additive Volumetric Ratio |
| 2-1* | 1.72 | 3.45 | 0.086 | 50.1/1 |
| 2-2* | 1.72 | 3.36 | 0.082 | 51.2/1 |
| 2-3* | 1.72 | 2.86 | 0.072 | 49.6/1 |
| 2-4** | 2.8-3.4 | 2.09 | 0.054 | 48.4/1 |
| 2-5** | 2.8-3.4 | 3.92 | 0.1 | 49/1 |
| 2-6** | 2.8-3.4 | 2.8 | .072 | 48.6/1 |
| 2-7*** | 2.8-3.4 | 3.18 | 0.082 | 48.6/1 |
| 2-8*** | 2.8-3.4 | 4.0 | 0.104 | 48.1/1 |
| 2-9*** | 2.8-3.4 | 4.26 | 0.109 | 48.9/1 |

| | | | | |
|---|---|---|---|---|
| * Flow rate of sealant not measured | | | | |
| ** Flow rate of sealant approximately 599 kg/hr | | | | |
| *** Flow rate of sealant approximately 707 kg/hr | | | | |

## Claims

1. A method of metering a liquid additive into a liquid silicon-containing material comprising feeding a liquid silicon-containing material through a first rotary gear positive displacement pump causing a driving mechanism connecting the first rotary gear positive displacement pump to a second rotary gear positive displacement pump to rotate causing the second rotary gear positive displacement pump to pump a liquid additive at a volume flow rate proportionate to the volume flow rate of the liquid silicon-containing material through the first rotary gear positive displacement pump.

2. The method according to claim 1, wherein the liquid silicon-containing material comprises a polydiorganosiloxane.

3. The method according to claim 1, wherein the liquid silicon-containing material comprises a silicone sealant.

4. The method according to any of claims 1 to 3, wherein the liquid additive comprises a material which is not required for preparing the liquid silicon-containing material but is added to the liquid silicon-containing material as desired to tailor the liquid silicon-containing material for its intended use.

5. The method according to any of claims 1 to 4, wherein the liquid additive comprises a pigment.

6. The method according to any of claims 1 to 5, wherein the liquid silicon-containing material and the liquid additive each has a viscosity within a range of 0.1 to 3,000,000 mPa·s, as measured at 25°C.

7. The method according to claim 6, wherein the liquid silicon-containing material and the liquid additive each has a viscosity within a range of 0.1 to 300,000 mPa·s, as measured at 25°C.

8. The method according to any of claims 1 to 7, wherein the first rotary gear positive displacement pump has a volume flow rate of 1 to 200 times the volume flow rate of the second rotary gear positive displacement pump.

9. The method according to claim 8, wherein the first rotary gear positive displacement pump has a volume flow rate of 1 to 60 times the volume flow rate of the second rotary gear positive displacement pump.

10. The method according to any of claims 1 to 9, wherein the liquid silicon-containing material is fed through the first rotary gear positive displacement pump under positive pressure.

11. The method according to claim 10, wherein the liquid silicon-containing material is fed through the first rotary gear positive displacement pump under a positive pressure in the range of 0.0007 to 4.14 MPa.

12. The method according to any of claims 1 to 11, wherein the liquid additive is fed to the second rotary gear positive displacement pump under a positive pressure no higher than 0.17 MPa.

13. The method according to any of claims 1 to 12, wherein the liquid silicon-containing material is fed through the first rotary gear positive displacement pump at a volume flow rate from 24 to 15,000 l/hr.

14. The method according to claim 13, wherein the liquid silicon-containing material is fed through the first rotary gear positive displacement pump at a volume flow rate from 37 to 7,000 l/hr.

15. The method according to any of claims 1 to 14, wherein the liquid silicon-containing material is fed through the first rotary gear positive displacement pump at a temperature less than the boiling point of any component of the liquid silicon-containing material or 200°C., whichever is lower.

16. The method according to any of claims 1 to 15, wherein the liquid silicon-containing material is fed through the first rotary gear positive displacement pump at a temperature between 20 and 50°C.

17. The method according to any of claims 1 to 16, wherein the first rotary gear positive displacement pump and the second rotary gear positive displacement pump each comprises two gears which rotate with an extremely small clearance between each other and between the surface of the gears and the pump casing.

18. The method according to any of claims 1 to 17, wherein the driving mechanism comprises a three piece flexible coupling.

19. A method of metering a liquid additive into a liquid silicon-containing material comprising feeding a liquid polydiorganosiloxane through a first rotary gear positive displacement pump under positive pressure causing a driving mechanism connecting the first rotary gear positive displacement pump to a second rotary gear positive displacement pump to rotate causing the second rotary gear positive displacement pump to pump under positive pressure a liquid additive at a volume flow rate proportionate to the volume flow rate of the liquid silicon-containing material through the first rotary gear positive displacement pump.

20. A method of metering a liquid additive into a liquid silicon-containing material comprising feeding a liquid silicone sealant through a first rotary gear positive displacement pump under positive pressure causing a driving mechanism connecting the first rotary gear positive displacement pump to a second rotary gear positive displacement pump to rotate causing the second rotary gear positive displacement pump to pump under a positive pressure no higher than 0.17 MPa, a liquid pigment at a volume flow rate proportionate to the volume flow rate of the liquid silicon-containing material through the first rotary gear positive displacement pump.
